# EUROPEAN PATENT APPLICATION

(11) **EP 4 847 285 A1**
(43) Date of publication of application: **02.12.2026**
(21) Application number: 26180472.8
(22) Date of filing: 22.05.2026
(51) Int. Cl.: B60J 7/00, B60J 1/20

(54) **VEHICLE SHADE DEVICE**

(30) Priority: 27.05.2025 JP 2025088245; 27.03.2026 JP 2026054384
(71) Applicant: AISIN CORPORATION, Kariya, Aichi 448-8650 (JP)
(72) Inventor: MIYAHARA, Jun, Kariya, Aichi, 448-8650 (JP); KAWAZU, Aisei, Kariya, Aichi, 448-8650 (JP)
(74) Representative: TBK

(57) **Abstract**

A vehicle shade device (1, 1B, 1C, 1D, 1E, 1F) includes a shade (2), a winding member (3), a winding component (4), first and second strings (S1, S2), and a drive device (10). The winding member (3) winding the shade (2) is a hollow cylindrical body that has flexibility and into which a non-rotatable arc-shaped axial member (30) is inserted. The winding component (4) is rotatable together with the winding member (3). The first string (S1) is wound around the winding component (4). The second string (S2) is connected to the shade (2). The drive device (10) pulls the shade (2) out from the winding member (3) by retracting the second string (S2) while feeding out the first string (S1), or winds the shade (2) onto the winding member (3) by retracting the first string (S1) while feeding out the second string (S2).

## Description

### TECHNICAL FIELD

This disclosure generally relates to a vehicle shade device.

### BACKGROUND DISCUSSION

Conventionally, a vehicle shade device has been proposed (e.g., refer to JP 2025-042247A (Reference 1)). The proposed vehicle shade device includes a shade, a winding member, a spool (winding component), a string, a drive device, and a first slack absorption mechanism. The winding member winds the shade. The spool is rotatable coaxially and integrally with the winding member. The string is fixed to and wound around the spool. The drive device winds the string onto a drum member, and thereby rotates the spool and the winding member in a direction opposite to a winding direction of the shade. The first slack absorption mechanism absorbs slack in the string that occurs between the drum member and the spool. The winding member is a hollow cylindrical body. Both end portions of the winding member are rotatably supported by bearings. The first slack absorption mechanism includes a torsion spring that is arranged inside the winding member and that biases the spool relative to the winding member in the direction opposite to the winding direction of the shade.

In the above-described vehicle shade device, it is assumed that the winding member is the hollow cylindrical body including both end portions rotatably supported and is formed in a straight shape. For this reason, when the winding member is arranged at a curved roof of a vehicle body for mounting the vehicle shade device, an extra space is required in the height direction, and thus an overhead space in a vehicle interior becomes narrower.

A need thus exists for a vehicle shade device that can secure an overhead space in a vehicle interior even when a winding member is arranged at a curved roof of a vehicle body for mounting the vehicle shade device.

### SUMMARY

This disclosure provides the following means in order to solve the above problem.

A vehicle shade device according to this disclosure is a vehicle shade device to be provided at a roof of a vehicle, and includes a shade, a winding member, a winding component, a first string, a second string, and a drive device. The winding member is a hollow cylindrical body having flexibility and winds the shade. A non-rotatable axial member curved in an arc shape is inserted into the hollow cylindrical body in such a way that the hollow cylindrical body is supported rotatably relative to the axial member. The winding component is arranged coaxially at an end portion of the winding member and rotatable together with the winding member. The first string is wound around the winding component. The second string is connected to a distal end portion of the shade. The drive device switchably executes first drive operation of pulling the shade out from the winding member by retracting the second string while feeding out the first string, and second drive operation of winding the shade onto the winding member by retracting the first string while feeding out the second string.

According to the vehicle shade device of this disclosure, the winding member is configured as the hollow cylindrical body that has flexibility and into which the non-rotatable axial member curved in an arc shape is inserted into the hollow cylindrical body in such a way that the hollow cylindrical body is supported rotatably relative to the axial member. Thereby, the winding member can be arranged along a curved shape of a roof of a vehicle. As a result, a height-direction thickness of the vehicle shade device can be suppressed, and an overhead space in a vehicle interior can be sufficiently secured.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a perspective view illustrating a main part of a vehicle including a vehicle shade device according to this embodiment;
FIG. 2 is a schematic configuration diagram of the vehicle shade device according to this embodiment;
FIG. 3 is an III-III sectional view in FIG. 2;
FIG. 4 is a partially enlarged view of FIG. 3;
FIG. 5 is a V-V sectional view in FIG. 4;
FIG. 6 is a perspective view of a winding component and a part of a winding member;
FIG. 7 is an exploded perspective view of the winding component and a part of the winding member;
FIG. 8 is an illustration that represents opening operation of the vehicle shade device;
FIG. 9 is an illustration that represents closing operation of the vehicle shade device;
FIG. 10 is an illustration that represents opening operation of a vehicle shade device according to an alternative embodiment;
FIG. 11 is an illustration that represents closing operation of the vehicle shade device according to the alternative embodiment;
FIG. 12 is an illustration that represents opening operation of a vehicle shade device according to an alternative embodiment;
FIG. 13 is an illustration that represents closing operation of the vehicle shade device according to the alternative embodiment;
FIG. 14 is an illustration that represents opening operation of a vehicle shade device according to an alternative embodiment;
FIG. 15 is an illustration that represents closing operation of the vehicle shade device according to the alternative embodiment;
FIG. 16 is an illustration that represents opening operation of a vehicle shade device according to an alternative embodiment;
FIG. 17 is an illustration that represents closing operation of the vehicle shade device according to the alternative embodiment;
FIG. 18 is an illustration that represents opening operation of a vehicle shade device according to an alternative embodiment; and
FIG. 19 is an illustration that represents closing operation of the vehicle shade device according to the alternative embodiment.

### DETAILED DESCRIPTION

Next, embodiments for implementing this disclosure is described with reference to the drawings.

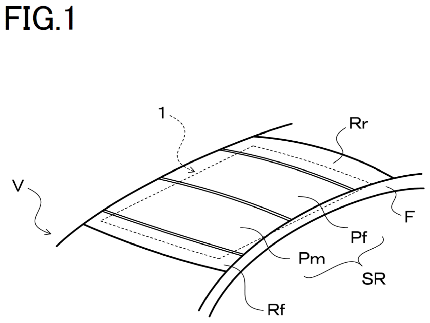

FIG. 1 is a perspective view illustrating a vehicle V including a vehicle shade device 1 (hereinafter, simply referred to as "shade device") according to an embodiment of this disclosure. The vehicle V includes a sunroof device SR provided between a front roof panel Rf and a rear roof panel Rr that are fixed to a vehicle body F. The shade device 1 is attached to the vehicle body F in such a way as to be positioned on a lower side of a transparent movable panel Pm and a transparent fixed panel Pf of the sunroof device SR. Alternatively, the shade device 1 may be attached to the vehicle body F in such a way as to be positioned on a lower side of a fixed transparent roof (glass roof) provided between the front roof panel Rf and the rear roof panel Rr.

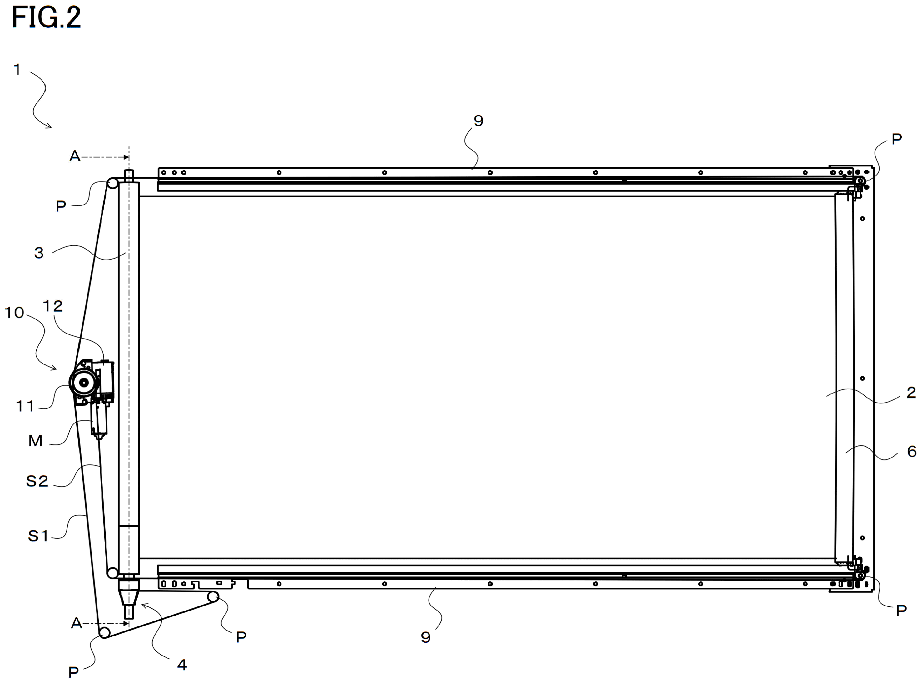

As illustrated in FIG. 2, the shade device 1 includes a shade 2, a winding member 3, a shade bar 6, a first slack absorption mechanism 5, second slack absorption mechanisms 7 and 8, a pair of (two) guide members 9, and a drive device 10 for opening and closing the shade 2. The shade 2 is a rectangular light-shielding sheet made of cloth, for example. The shade 2 has an area that can completely cover light-transmitting portions of the movable panel Pm and the fixed panel Pf of the sunroof device SR. The shade 2 may also have a heat-shielding property.

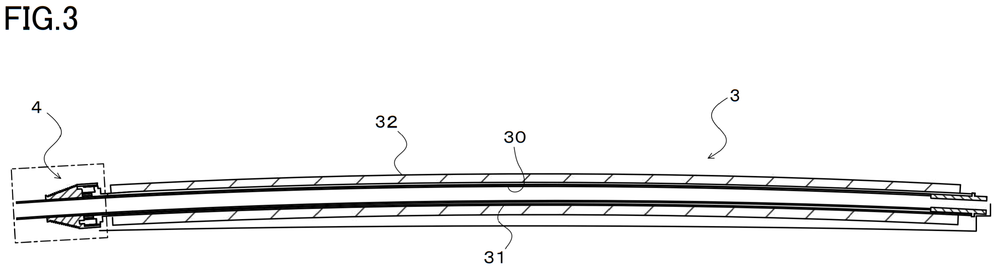

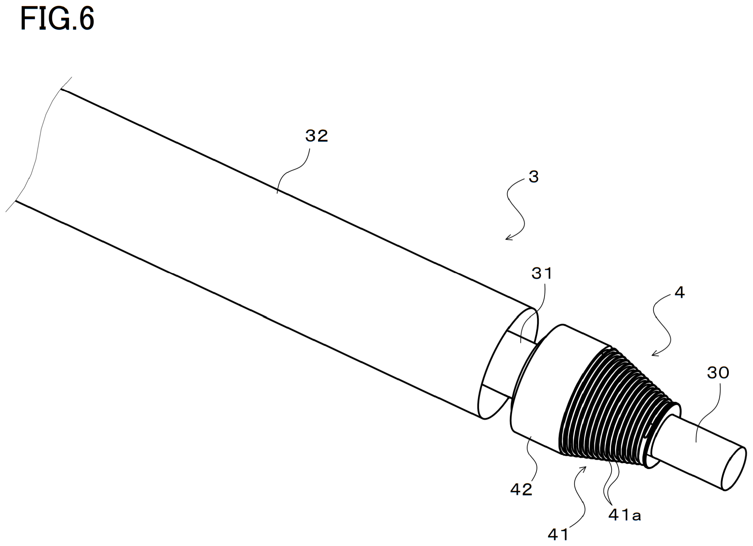

As illustrated in FIG. 3, FIG. 6, and FIG. 7, the winding member 3 includes a rotating member 31 and an outer skin member 32. The rotating member 31 is a hollow cylindrical body. A fixed shaft (axial member) 30 passes through an inside of the rotating member 31. The rotating member 31 is supported rotatably relative to the fixed shaft 30. The fixed shaft 30 is a hollow cylindrical body made of metal, and is curved in an arc shape in such a way as to conform to a shape of a roof of the vehicle body F. Both ends of the fixed shaft 30 are fixed by an unillustrated housing in such a way as to be non-rotatable. Alternatively, the fixed shaft 30 may be a solid cylindrical body.

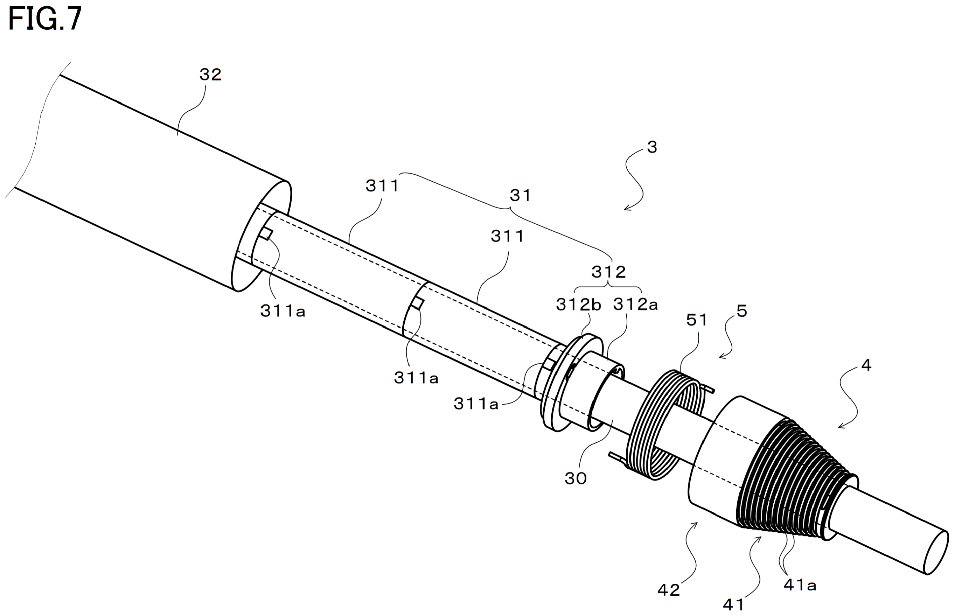

As illustrated in FIG. 7, the rotating member 31 includes a plurality of resin rotating pieces 311 and 312 coupled in series to each other. A plurality of the rotating pieces 311 coupled in series to each other includes the rotating piece 311 positioned on an end and including an end portion that is not connected to another of the rotating pieces 311 and that is coupled to the rotating piece 312. The respective rotating pieces 311 and 312 are coupled to each other in such a way that end portions of the rotating pieces 311, 312 adjacent to each other are swingable relative to each other. Thereby, the rotating member 31 is configured to be flexible as a whole. In this embodiment, an engagement hole (not illustrated) is formed at one end of each of the rotating pieces 311 and 312, and an engagement claw 311a is formed at the other end of each of the rotating pieces 311. The end portions of the rotating pieces 311, 312 adjacent to each other are coupled to each other by engaging the engagement claw 311a of one of the rotating pieces 311 with the engagement hole of the other of the rotating pieces 311, 312. Thereby, the rotating member 31 can flex as a whole to be rotatable relative to the arc-shaped curved fixed shaft 30. The outer skin member 32 is formed of a flexible material in such a way as to cover the outer circumferential surface of the rotating member 31. The shade 2 includes a base end portion fixed to an outer circumferential surface of the outer skin member 32. Rotating the winding member 3 around the axis in a predetermined winding direction can cause the shade 2 to be wound onto the winding member 3 so that the shade 2 can be opened.

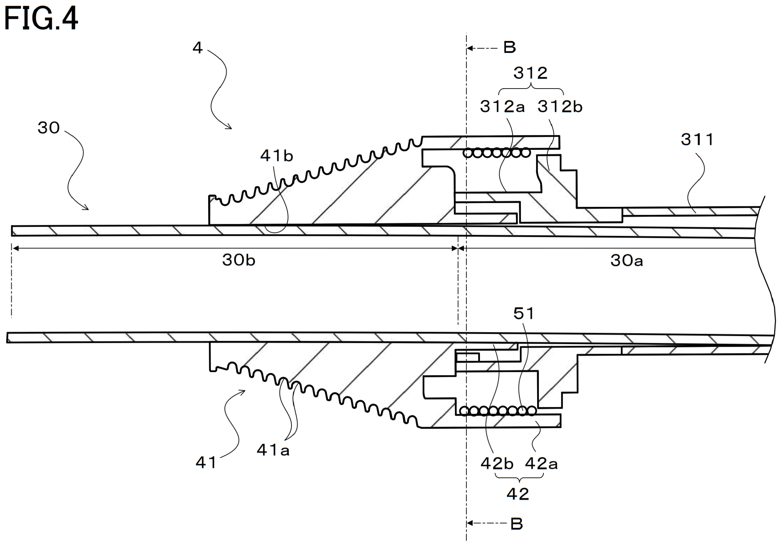

A spool 4 (winding component) is coaxially attached to one end of the winding member 3. The spool 4 includes a conical portion 41 formed in a substantially conical (frustoconical) shape and a hollow cylindrical portion 42 extending in the axial direction from a larger-diameter side in the conical portion 41. The spool 4 is coaxially attached to the winding member 3 (rotating member 31) in such a way that a side of the hollow cylindrical portion 42 is positioned on a side of the winding member 3. In this embodiment, as illustrated in FIG. 4, the fixed shaft 30 includes a curved portion 30a that curves in an arc shape and a straight portion 30b that extends linearly in a tangential direction from an end portion of the curved portion 30a. As illustrated in FIG. 4, a through hole 41b extending in the axial direction is formed at a center axis of the spool 4. The straight portion 30b of the fixed shaft 30 is inserted through the through hole 41b. The spool 4 is rotatably supported on the straight portion 30b of the fixed shaft 30. Alternatively, the fixed shaft 30 may be formed so as not to include the straight portion 30b. In this case, the spool 4 may be rotatably supported on a hollow cylindrical (or solid cylindrical) and linear support member that is coaxially fixed to an end portion included in the fixed shaft 30 and positioned on a side of the spool 4. As illustrated in FIG. 4, FIG. 6, and FIG. 7, a winding groove 41a extending spirally around the axis of the spool 4 is formed on an outer circumferential surface of the conical portion 41 of the spool 4.

As illustrated in FIG. 4 and FIG. 7, the first slack absorption mechanism 5 is arranged between the spool 4 and the rotating member 31 (rotating piece 312). The first slack absorption mechanism 5 includes a torsion spring 51 that biases the spool 4 relative to the winding member 3 in a direction opposite to the winding direction of the shade 2. The torsion spring 51 is what is called a torsion coil spring, is provided around an outer circumference of the fixed shaft 30, and is arranged coaxially with the spool 4 and the rotating member 31 (rotating piece 312) and between the spool 4 and the rotating member 31 (rotating piece 312) that is also provided around the outer circumference of the fixed shaft 30. In a state where the torsion spring 51 is pre-twisted in the winding direction of the shade 2, one end of the torsion spring 51 is fixed to the spool 4 and the other end of the torsion spring 51 is fixed to the rotating piece 312. In this embodiment, the hollow cylindrical portion 42 of the spool 4 has an outer hollow cylindrical portion 42a and an inner hollow cylindrical portion 42b that extend on an outer side and on an inner side respectively to form a double-layer structure, as illustrated in FIG. 4. The rotating piece 312 includes a hollow cylindrical portion 312a extending between the outer hollow cylindrical portion 42a and the inner hollow cylindrical portion 42b of the spool 4, and a disk-shaped flange portion 312b extending outward in the radial direction. The torsion spring 51 is arranged in an annular space that is surrounded by the outer hollow cylindrical portion 42a of the hollow cylindrical portion 42 of the spool 4 and the hollow cylindrical portion 312a and the flange portion 312b of the rotating piece 312. Arranging the torsion spring 51 on an outer side of the rotating member 31 (rotating piece 312) in the radial direction can reduce an outer diameter of the winding member 3 compared to a configuration where the torsion spring 51 is arranged on an inner side of the rotating member 31 in the radial direction. As a result, a height-direction thickness of the vehicle shade device can be reduced. Thus, an overhead space in the vehicle interior can be sufficiently secured. Arranging the torsion spring 51 on an inner side of the outer hollow cylindrical portion 42a of the spool 4 in the radial direction can restrict an acting direction of a load of the torsion spring 51. Thus, the load can be made to act in the appropriate direction.

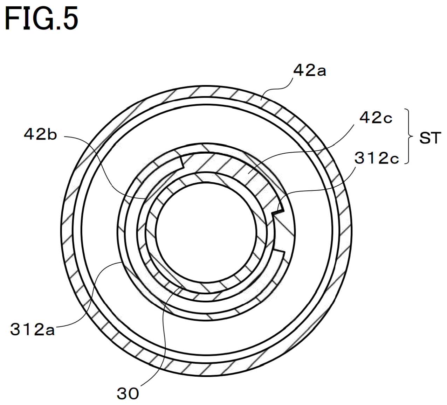

The first slack absorption mechanism 5 includes a stopper ST. As illustrated in FIG. 5, the stopper ST includes a projection 42c protruding outward in the radial direction from an outer circumferential surface of the inner hollow cylindrical portion 42b of the spool 4, and a contact surface 312c formed in the hollow cylindrical portion 312a of the rotating piece 312. The contact surface 312c extends in an inner radial direction and the axial direction of the hollow cylindrical portion 312a of the rotating piece 312. When the projection 42c contacts against the contact surface 312c, the rotation of the spool 4 relative to the winding member 3 in the winding direction of the shade 2 is restricted.

The shade bar 6 is a hollow member, and is fixed to a distal end portion (the end portion opposite to a base end portion fixed to the winding member 3) of the shade 2. In this embodiment, a hollow cylindrical portion is formed at the distal end portion of the shade 2. A rod member is inserted into this hollow cylindrical portion. This hollow cylindrical portion and the rod member are fitted into a shade-holding groove (not illustrated) formed in the shade bar 6. Thereby, the shade bar 6 is fixed to the distal end portion of the shade 2. A shoe is fixed to each longitudinal-direction end portion of the shade bar 6.

A pair of the guide members 9 each have a cross-sectional shape that is uniform along the longitudinal direction. Each of the guide members 9 slidably supports the corresponding shoe of the shade bar 6 and the corresponding lateral end portion of the shade 2. A pair of the guide members 9 are fixed to the housing (not illustrated) via a bolt or the like in such a way as to extend parallel to each other at an interval corresponding to a width of the shade 2. The housing accommodates the drive device 10 and non-rotatably supports both ends of the fixed shaft 30. The housing is fixed to the vehicle body F in such a way that on a lower side of the sunroof device SR, the winding member 3 extends in the width direction of the vehicle V and a pair of the guide members 9 extend in the front-rear direction of the vehicle V. However, the housing may be fixed to the vehicle body F in such a way that the winding member 3 extends in the front-rear direction of the vehicle V and a pair of the guide members 9 extend in the width direction of the vehicle V.

The drive device 10 of the shade device 1 rotates the winding member 3 around the fixed shaft 30 via a first string S1, and separates the shade bar 6, i.e., the distal end portion of the shade 2, from the winding member 3 via a second string S2. As illustrated in FIG. 2, the drive device 10 includes a single drum member 11, a single motor M as a rotation drive source, and a power transmission mechanism 12. The drum member 11 is formed of resin or the like in such a way as to include a cylindrical outer surface, and is rotatable around an axis Ad that extends in the up-down direction, for example. A winding groove extending spirally around the axis Ad is formed on the outer surface of the drum member 11.

The first string S1 is a wire made of metal. However, the first string S1 may also be a thread made of synthetic fibers or the like. One end of the first string S1 is fixed (locked) to an end portion on a larger-diameter side in the conical portion 41 of the spool 4. The first string S1 is wound into the winding groove 41a of the conical portion 41 of the spool 4, in the direction opposite to the winding direction.

The other end of the first string S1 is fixed to the outer circumferential surface of the drum member 11. When the drum member 11 rotates in a predetermined first direction around the axis Ad, the first string S1 is wound into the winding groove of the drum member 11.

The second string S2 is a wire made of metal. However, the second string S2 may also be a thread made of synthetic fibers or the like. A central portion of the second string S2 is fixed to the drum member 11. A portion (the portion from the central portion to the one end) on one end side in the second string S2 and a portion (the portion from the central portion to the other end) on the other end side in the second string S2 enter the winding groove at different circumferential-direction positions on the drum member 11, and are wound into the winding groove of the drum member 11 when the drum member 11 rotates in a second direction opposite to the first direction around the axis Ad.

The portion on the one end side in the second string S2 is stretched over pulleys P arranged on both outer sides of the one guide member 9 in the extending direction of the one guide member 9. One end of the second string S2 reaches an internal space on one end side in the shade bar 6, and is connected to a one-end-side portion of the shade bar 6 via the second slack absorption mechanism 7 arranged in this internal space. The portion on the other end side in the second string S2 is stretched over pulleys P arranged on both outer sides of the other guide member 9 in the extending direction of the other guide member 9. The other end of the second string S2 reaches an internal space on the other end side in the shade bar 6, and is connected to the other-end-side portion of the shade bar 6 via the second slack absorption mechanism 8 arranged in this internal space. Thereby, the one end and the other end of the second string S2 are supported by pulleys P arranged on both outer sides of a pair of the guide members 9 in the extending direction of a pair of the guide members 9, and are connected to the distal end portion of the shade 2 via the shade bar 6 and the like. In this embodiment, the second slack absorption mechanisms 7 and 8 include tension coil springs as biasing members. The tension coil spring of the second slack absorption mechanism 7 biases the one end of the second string S2 from one end side of the shade bar 6 to the other end side of the shade bar 6. The tension coil spring of the second slack absorption mechanism 8 biases the other end of the second string S2 from the other end side of the shade bar 6 to the one end side of the shade bar 6. Thereby, the second string S2 is pulled in a direction from the drum member 11 toward the shade bar 6. Each of the pulleys P is rotatably supported by the housing.

The motor M of the drive device 10 rotates the drum member 11 in forward and reverse directions around the axis Ad via the power transmission mechanism 12. In this embodiment, the motor M is a brushed DC motor, for example, and is controlled by a control device (not illustrated). The control device includes a microcomputer including a CPU, a ROM, a RAM, an input-output interface, and the like. The control device controls the motor M in response to operation of a user on an unillustrated shade opening-closing switch. The power transmission mechanism 12 includes a reduction gear or a gear mechanism, for example. However, the power transmission mechanism 12 may be omitted, and the motor M may be coupled directly to the drum member 11.

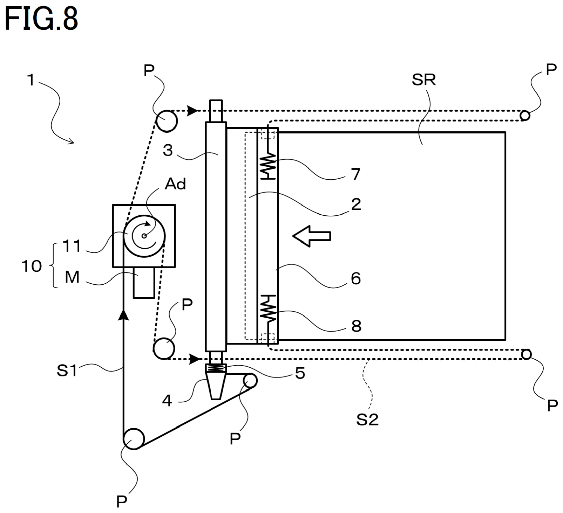

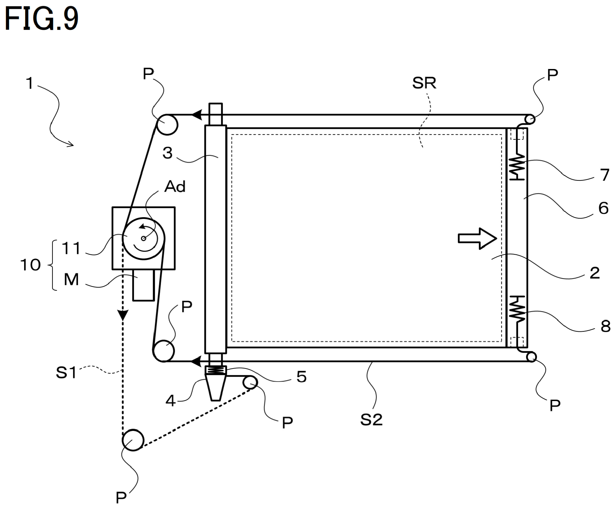

Next, opening and closing operation of the above-described shade device 1 is described with reference to FIG. 8 and FIG. 9.

The shade 2 is pulled out from the winding member 3 and is fully or partially closed. When a user makes instruction of opening (fully opening or half-opening) the shade 2 via the shade opening-closing switch in this state, the control device controls the motor M of the drive device 10 in such a way as to rotate the drum member 11 around the axis Ad in the first direction (the clockwise direction in FIG. 8), as illustrated in FIG. 8. When the drum member 11 rotates in the first direction, as illustrated in FIG. 8, the second string S2 is fed out from the drum member 11 toward the one end side and the other end side of the shade bar 6, and the first string S1 is wound onto the drum member 11.

In other words, the drive device 10 rotates the drum member 11 in the first direction, and thereby causes the one-end-side portion and the other-end-side portion of the second string S2 to be fed from the winding groove, and causes the first string S1 to be wound into the winding groove that becomes empty. Thereby, in response to the winding of the first string S1 onto the drum member 11, the spool 4 and the winding member 3 rotate around the fixed shaft 30 in the winding direction of the shade 2. The shade bar 6 is allowed to move toward the winding member 3 in response to the feeding-out of the second string S2. As a result of this, the shade 2 can be opened by moving the shade bar 6 toward the winding member 3 while winding the shade 2 onto the winding member 3.

Meanwhile, when the user makes instruction of closing (fully closing or half-closing) the shade 2 via the shade opening-closing switch in a state where the shade 2 is fully or partially open after being wound by the winding member 3, the control device controls the motor M of the drive device 10 in such a way as to rotate the drum member 11 around the axis Ad in the second direction (the counterclockwise direction in FIG. 9), as illustrated in FIG. 9. The rotation of the drum member 11 in the second direction feeds out the first string S1 from the drum member 11 toward the spool 4, and winds, onto the drum member 11, a portion (the portion included in the second string S2 and positioned on the one end side of the shade bar 6) that is included in the second string S2 and that is between the drum member 11 and the one end of the shade bar 6 and a portion (the portion included in the second string S2 and positioned on the other end side of the shade bar 6) that is included the second string S2 and that is between the drum member 11 and the other end of the shade bar 6, as illustrated in FIG. 9.

In other words, the drive device 10 rotates the drum member 11 in the second direction, and thereby feeds out the first string S1 from the winding groove, while winding the one-end-side portion and the other-end-side portion of the second string S2 into the winding groove that becomes empty. Thereby, the shade bar 6 separates from the winding member 3, depending on the winding of the second string S2 onto the drum member 11. Then, as the shade bar 6 moves, the shade 2 is pulled out from the winding member 3, and the winding member 3 and the spool 4 rotate around the fixed shaft 30 in the direction of feeding out the shade 2. As a result, the shade 2 can be pulled out from the winding member 3 to be closed, and at the same time, the first string S1 can be wound onto the spool 4 that rotates together with the winding member 3, depending on the pulling-out of the shade 2 (movement of the shade bar 6).

Herein, the fixed shaft 30 is curved in the arc shape and is non-rotatably fixed, while the winding member 3 (rotating member 31) is flexible and is rotatable relative to the fixed shaft 30. For this reason, the shade device 1 (winding member 3) can be arranged to the vehicle V with the curved roof in such a way as to be as close to the roof as possible, and a height-direction thickness of the shade device 1 can be suppressed to sufficiently secure an overhead space in the vehicle interior. The rotating member 31 of the winding member 3 includes a plurality of the rotating pieces 311 coupled in series to each other by the engagement claws 311a in such a way as to be swingable relative to each other. Thereby, the flexibility to the entire rotating member 31 can be achieved while the rigidity of each individual rotating piece 311 can be secured. Thus, the winding member 3 can be smoothly rotated relative to the fixed shaft 30 curved in the arc shape. Further, a weight of the winding member 3 can be reduced by using the rotating pieces 311 made of resin.

Incidentally, the shade 2 and the first and second strings S1 and S2 elongate due to a change in ambient temperature and application of tensile loads. When at least one of the shade 2 and the first and second strings S1 and S2 elongate, a correlation between a movement amount of the first and second strings S1 and S2 (an amount of the first and second strings S1 and S2 wound onto the drum member 11) and a movement amount of the shade 2 is impaired to cause slack in at least one of the first and second strings S1 and S2.

For example, when the shade 2 elongates, even if the second string S2 is wound onto the drum member 11 by a specified amount in an attempt to close the shade 2, the shade 2 starts to be pulled out from the winding member 3 after the slack due to the elongation is eliminated. Accordingly, an amount of the shade 2 pulled out from the winding member 3 does not reach an amount corresponding to the specified amount, and a rotation amount of the winding member 3 and the spool 4 becomes insufficient, causing slack in the first string S1. Further, when the shade 2 elongates, even if the first string S1 is wound onto the drum member 11 by a specified amount in an attempt to open the shade 2, the shade 2 starts to be wound onto the winding member 3 after the slack due to the elongation is eliminated. Accordingly, an amount of the shade 2 wound onto the winding member 3 does not reach an amount corresponding to the specified amount, and a movement amount of the shade 2 becomes insufficient, causing slack in the second string S2. Furthermore, when the first string S1 or the second string S2 elongates, the first string S1 or the like slackens between the drum member 11 and the spool 4, for example.

When the first or second string S1, S2 slackens by an amount exceeding an allowable amount, the shade 2 cannot be properly moved by winding the first or second string S1, S2 onto the drum member 11, and in some cases, the first or second strings S1, S2 is prone to disengage from the pulley P. In view of this, the shade device 1 includes the first slack absorption mechanism 5 that absorbs slack in the first string S1 occurring between the drum member 11 and the spool 4, and the second slack absorption mechanisms 7 and 8 that absorb slack in the second string S2 occurring between the drum member 11 and the distal end portion of the shade 2.

As described above, the first slack absorption mechanism 5 absorbing slack in the first string S1 includes a torsion spring 51 that is arranged between the winding member 3 (rotating member 31) and the spool 4 in such a way as to be coaxial with the winding member 3 and the spool 4. The torsion spring 51 biases the spool 4 relative to the winding member 3 in the direction (the direction in which the first string S1 is wound onto the spool 4) opposite to the winding direction of the shade 2. When the first string S1 does not slacken between the drum member 11 and the spool 4, the tension of the first string S1 overcomes the biasing force of the torsion spring 51, and the stopper ST restricts rotation of the spool 4 relative to the winding member 3 in the winding direction of the shade 2.

Meanwhile, when slack is about to occur in the first string S1 between the drum member 11 and the spool 4, the biasing force of the torsion spring 51 rotates the spool 4 relative to the winding member 3 in the direction opposite to the winding direction of the shade 2, depending on a decrease in tension of the first string S1 until the tension of the first string S1 balances with the biasing force of the torsion spring 51. Thereby, the first string S1 is wound onto the spool 4 so that the slack in the first string S1 is absorbed by the first slack absorption mechanism 5 (torsion spring 51). As a result, in the shade device 1 including the first slack absorption mechanism 5, even when slack occurs in at least one of the shade 2 and the first string S1, occurrence of slack in the first string S1 can be suitably suppressed, and the shade 2 can be moved appropriately.

The torsion spring 51 is provided around the outer circumference of the fixed shaft 30, and is arranged coaxially with the spool 4 and the rotating member 31 (rotating piece 312) and between the spool 4 and the rotating member 31 (rotating piece 312) that is provided around the outer circumference of the fixed shaft 30. Thereby, the shade device 1 can be reduced in size, and mountability of the shade device 1 can be further improved. Furthermore, even when the fixed shaft 30 is curved in the arc shape, the appropriate biasing force can be applied to the spool 4 relative to the winding member 3 in the direction opposite to the winding direction of the shade 2.

Naturally, this disclosure is not limited to the above-described embodiment, and various configurations can be implemented as long as the configurations fall within the technical scope of this disclosure.

For example, the rotating member 31 of the winding member 3 is constituted by a plurality of the rotating pieces 311 and 312 coupled in series to each other in the above-described embodiment, but is not limited to this, and may be configured as an integrated body as long as the rotating member 31 is flexible.

Further, the one second string S2 is provided in the above-described embodiment, but the number of the second strings S2 does not need to be one, and two second strings S2 may be fixed to the drum member 11.

The shade device 1 is attached to the vehicle body F in such a way as to be positioned on a lower side of the sunroof device SR or the fixed transparent roof of the vehicle V, but is not limited to this, and may be provided at a rear window or a side window of the vehicle V.

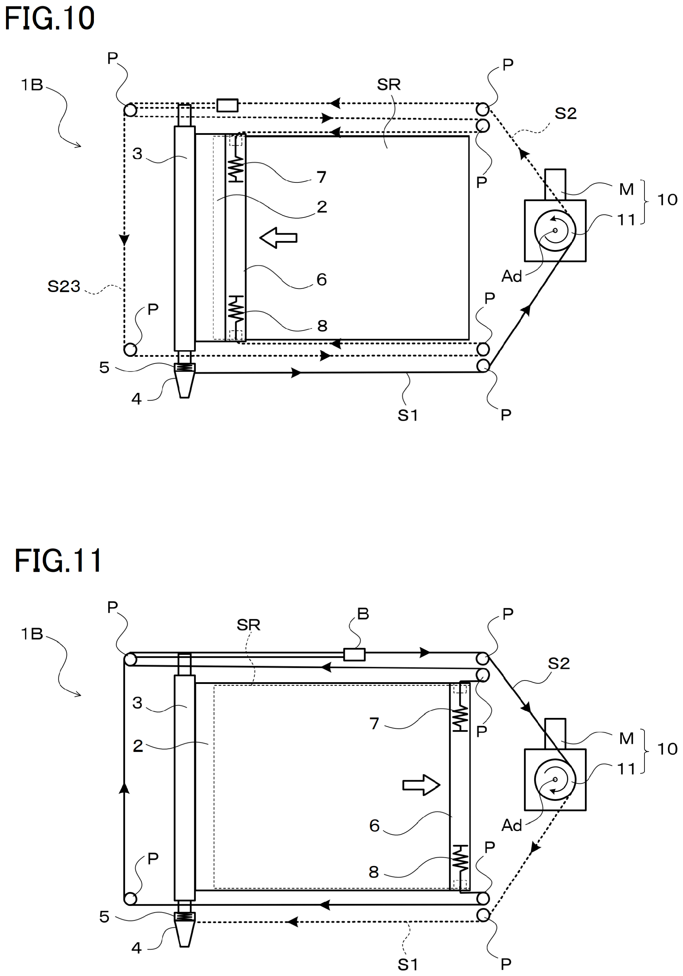

Next, a vehicle shade device 1B according to an alternative embodiment is described. In the vehicle shade device 1 according to the above-described embodiment, the drive device 10 is arranged on the same side as the winding member 3 in the front-rear direction of the vehicle V. However, in the vehicle shade device 1B according to this alternative embodiment, as illustrated in FIG. 10 and FIG. 11, the drive device 10 is arranged on an opposite side of the winding member 3 in the front-rear direction of the vehicle V. The second string S2 includes a portion connected to the drum member 11 and formed as a single string, and branches into two strings at a position separated from the drum member 11. These two strings are connected to a one-end-side portion and the other-end-side portion of the shade bar 6.

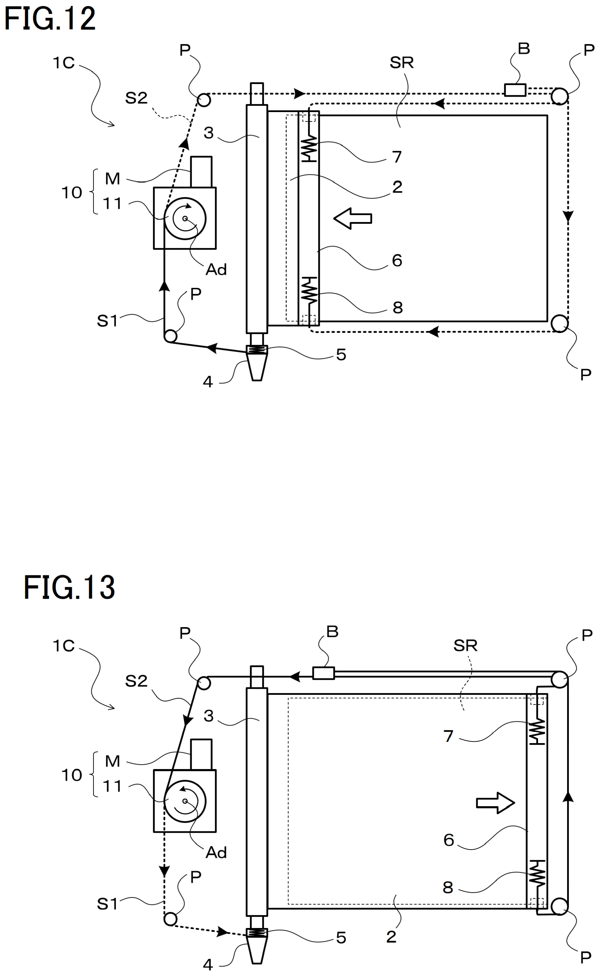

Next, a vehicle shade device 1C according to an alternative embodiment is described. In the vehicle shade device 1C according to this alternative embodiment, as illustrated in FIG. 12 and FIG. 13, the drive device 10 is arranged on the same side as the winding member 3 in the front-rear direction of the vehicle V, similarly to the vehicle shade device 1 according to the above-described embodiment. The second string S2 includes a portion connected to the drum member 11 and formed as a single string, and branches into two strings at a position separated from the drum member 11. These two strings are connected to a one-end-side portion and the other-end-side portion of the shade bar 6.

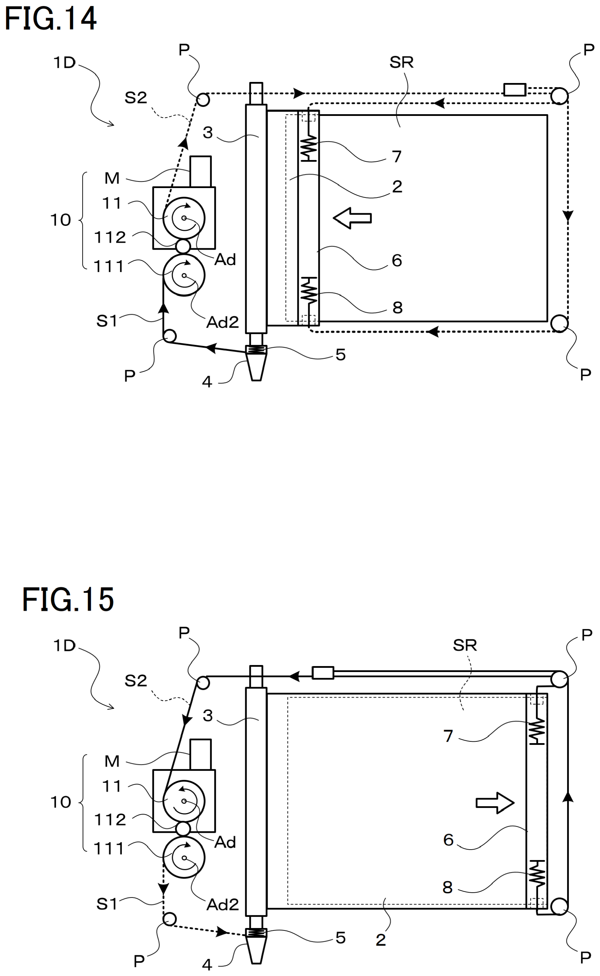

Next, a vehicle shade device 1D according to an alternative embodiment is described. In the vehicle shade device 1D according to this alternative embodiment, as illustrated in FIG. 14 and FIG. 15, the drive device 10 is arranged on the same side as the winding member 3 in the front-rear direction of the vehicle V, similarly to the vehicle shade device 1 according to the above-described embodiment, and includes two drum members 11 and 111. The drum member 111 is connected via a transmission member 112 to the drum member 11 driven by the motor M, and rotates in synchronization with the drum member 11. The first string S1 is fixed to the drum member 111, and the second string S2 is fixed to the drum member 11. The second string S2 includes a portion connected to the drum member 11 and formed as a single string, and branches into two strings at a position separated from the drum member 11. These two strings are connected to a one-end-side portion and the other-end-side portion of the shade bar 6. Alternatively, the first string S1 may be fixed to the drum member 11, and the second string S2 may be fixed to the drum member 111. In the configuration where only the first string S1 is connected to one drum member of the two drum members 11 and 111, the first slack absorption mechanism 5 (torsion spring 51) may be provided in the same drum member, instead of being provided in the spool 4.

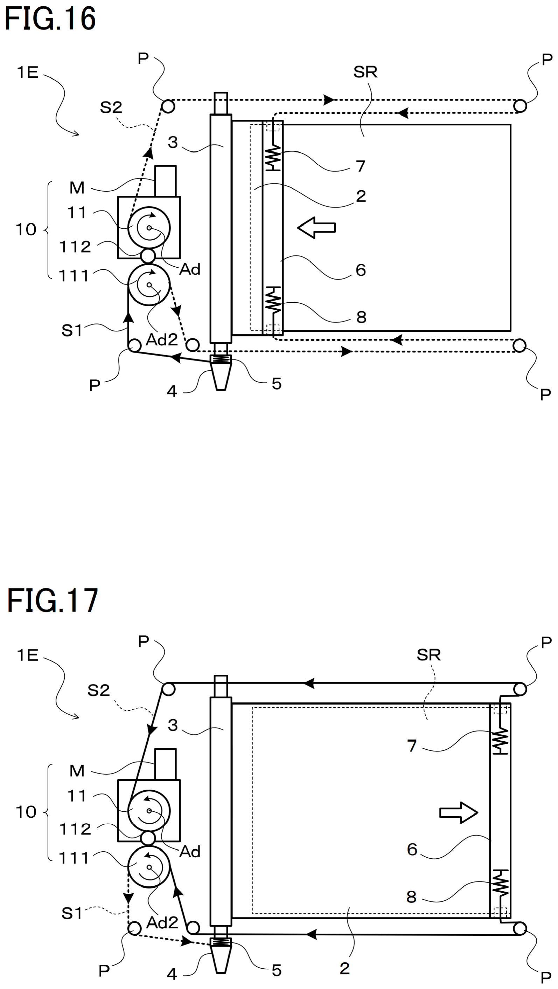

Next, a vehicle shade device 1E according to an alternative embodiment is described. In the vehicle shade device 1E according to this alternative embodiment, as illustrated in FIG. 16 and FIG. 17, similarly to the vehicle shade device 1D, the drive device 10 is arranged on the same side as the winding member 3 in the front-rear direction of the vehicle V, and includes the two drum members 11 and 111. The second string S2 is formed as two strings, one of which is fixed to the drum member 11 and the other of which is fixed to the drum member 111.

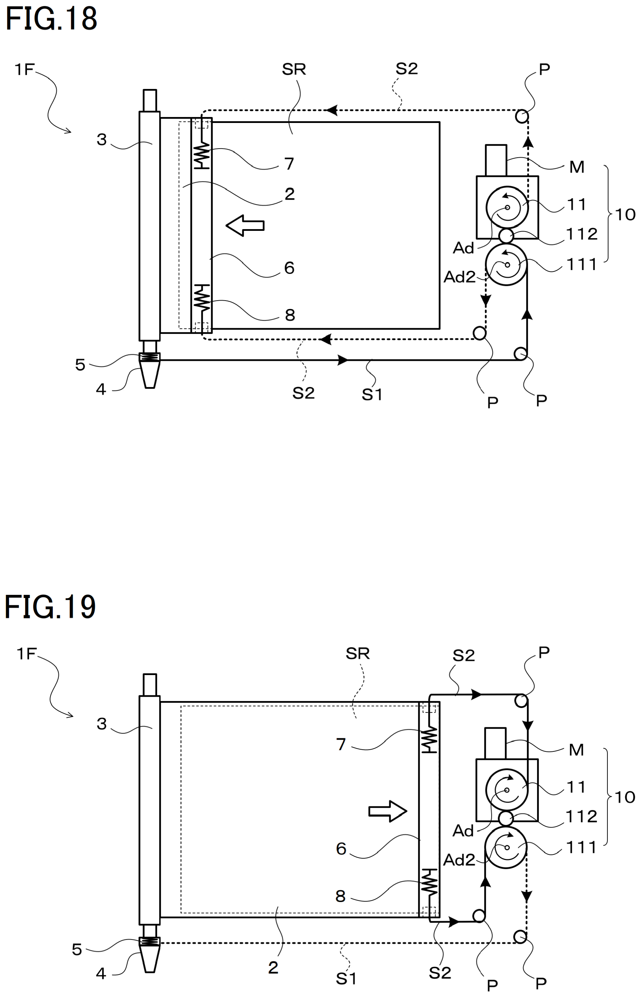

Next, a vehicle shade device 1F according to an alternative embodiment is described. In the vehicle shade device 1F according to this alternative embodiment, as illustrated in FIG. 18 and FIG. 19, the drive device 10 is arranged on a side opposite to the winding member 3 in the front-rear direction of the vehicle V, similarly to the vehicle shade device 1B, and includes the two drum members 11 and 111, similarly to the vehicle shade device 1D. The second string S2 is formed as two strings, one of which is fixed to the drum member 11 and the other of which is fixed to the drum member 111.

As described above, the drive device 10 may be configured to be arranged on the same side as the winding member 3 or on a side opposite to the winding member 3 in the front-rear direction of the vehicle V. Thereby, a position of the drive device 10 can be changed appropriately depending on layout and an installation space in the vehicle V.

Further, the drive device 10 may be configured to include the single drum member 11, or may be configured to include a plurality of the drum members 11 and 111 that are driven in synchronization with each other and that can each wind at least one of the first string S1 and the second string S2.

Further, the second string S2 may be configured to include a portion connected to the drum member and formed as a single string and branch into two strings at a position separated from the drum member. These two strings may be connected to a one-end-side portion and the other-end-side portion of the shade bar 6.

The arrangement number and arrangement positions of the pulleys P are set appropriately depending on an arrangement position of the drive device 10, a configuration of the second string S2, and a routing path of the second string S2.

### [Industrial applicability]

This disclosure can be used in the industry of manufacturing vehicle shade devices, for example.

## Claims

1. A vehicle shade device (1, 1B, 1C, 1D, 1E, 1F) to be provided at a roof of a vehicle, the vehicle shade device (1, 1B, 1C, 1D, 1E, 1F) comprising:
a shade (2);
a winding member (3) that is a hollow cylindrical body having flexibility and winds the shade (2), into which a non-rotatable axial member (30) curved in an arc shape is inserted in such a way that the hollow cylindrical body is supported rotatably relative to the axial member (30);
a winding component (4) to be arranged coaxially at an end portion of the winding member (3) and rotatable together with the winding member (3);
a first string (S1) to be wound around the winding component (4);
a second string (S2) to be connected to a distal end portion of the shade (2); and
a drive device (10) that switchably executes first drive operation of pulling the shade (2) out from the winding member (3) by retracting the second string (S2) while feeding out the first string (S1), and second drive operation of winding the shade (2) onto the winding member (3) by retracting the first string (S1) while feeding out the second string (S2).

2. The vehicle shade device (1, 1B, 1C, 1D, 1E, 1F) according to Claim 1, wherein
the winding member (3) includes a plurality of rotating pieces (311, 312) coupled in series to one another in such a way that the winding member (3) is flexible as a whole.

3. The vehicle shade device (1, 1B, 1C, 1D, 1E, 1F) according to Claim 1 or 2, further comprising:
a slack absorption mechanism (5) that absorbs slack in the first string (S1) between the drive device (10) and the winding component (4), wherein
the slack absorption mechanism (5) includes a biasing member (51) being arranged between the winding member (3) and the winding component (4) and biasing the winding component (4) relative to the winding member (3) in a direction opposite to a winding direction of the shade (2).

4. The vehicle shade device (1, 1B, 1C, 1D, 1E, 1F) according to Claim 3, wherein
the biasing member (51) is a torsion spring being inserted into the axial member (30) and coaxially arranged between the winding member (3) and the winding component (4), the torsion spring (51) including one end fixed to the winding member (3) and another end fixed to the winding component (4).

5. The vehicle shade device (1, 1B, 1C, 1D, 1E, 1F) according to Claim 4, wherein
the winding member (3) includes a hollow cylindrical portion (312a),
the winding component (4) includes an outer hollow cylindrical portion (42a) positioned on an outer side of the hollow cylindrical portion (312a) of the winding member (3) in a radial direction of the winding member (3), and
the torsion spring (51) is arranged between the hollow cylindrical portion (312a) of the winding member (3) and the outer hollow cylindrical portion (42a) of the winding component (4) in the radial direction.

6. The vehicle shade device (1, 1B, 1C, 1D, 1E, 1F) according to Claim 5, wherein
the torsion spring (51) is inserted into an outer circumference of the axial member (30) and arranged between the hollow cylindrical portion (312a) of the winding member (3) and the outer hollow cylindrical portion (42a) of the winding component (4) in the radial direction.

7. The vehicle shade device (1, 1B, 1C, 1D, 1E, 1F) according to Claim 3, wherein
the slack absorption mechanism (5) includes a stopper that restricts rotation of the winding component (4) relative to the winding member (3) in the winding direction of the shade (2).

8. The vehicle shade device (1, 1B, 1C, 1D, 1E, 1F) according to Claim 7, wherein
the winding member (3) includes a hollow cylindrical portion (312a),
the winding component (4) includes an inner hollow cylindrical portion (42b) positioned on an inner side of the hollow cylindrical portion (312a) of the winding member (3) in a radial direction of the winding member (3),
the stopper includes a projection (42c) that protrudes outward in the radial direction from an outer circumferential surface of the inner hollow cylindrical portion (42b) of the winding component (4), and a contact surface (312c) being formed in the hollow cylindrical portion (312a) of the winding member (3), and
rotation of the winding component (4) relative to the winding member (3) in the winding direction of the shade (2) is restricted by the projection (42c) contacting the contact surface (312c).

9. The vehicle shade device (1, 1B, 1C, 1D, 1E, 1F) according to Claim 1 or 2, wherein
the drive device (10) includes at least one drum member (11, 111) that can wind at least one of the first string (S1) and the second string (S2), and a drive source (M) that can drive the drum member (11, 111) in both forward and reverse rotational directions.

10. The vehicle shade device (1, 1B, 1C, 1D, 1E, 1F) according to Claim 9, wherein
the drive device (10) includes a plurality of drum members (11, 111) that can each wind at least one of the first string (S1) and the second string (S2).
